# EUROPEAN PATENT APPLICATION

(11) **EP 1 983 335 A2**
(43) Date of publication of application: **22.10.2008**
(21) Application number: 08005062.8
(22) Date of filing: 18.03.2008
(51) Int. Cl.: G01N 23/04, G01V 5/00

(54) **A CT scan security check device and method**

(30) Priority: 22.03.2007 CN 200710064662
(71) Applicant: Tsinghua University, Beijing 100084 (CN)
(72) Inventor: Kang, Kejun, Beijing 100084 (CN); Chen, Zhiqiang, Beijing 100084 (CN); Li, Yuanjing, Beijing 100084 (CN); Li, Yulan, Beijing 100084 (CN)
(74) Representative: Glawe, Delfs, Moll

(57) **Abstract**

The present invention provides a CT scan security check device, comprising a radiation source and a detector which form a radiation detection area, and a conveyer mechanism which conveys a checked article along a conveying path, characterized by also comprising a multidimensional movement mechanism which makes the checked article and the radiation detection area generate a relative displacement in a vertical direction and makes the checked article rotate about a vertical axis. On the other aspect, the present invention provides a CT scan security check method, comprising the following steps: 1) making the checked article and the radiation detection area generate a relative displacement in a vertical direction and making the checked article to perform a rotation movement; 2) during the checked article passing through the radiation detection area, obtaining information data on the radiation ray through the checked article; and 3) transmitting out the information data for CT arithmetic reconstruction.. In this way, it is at least achieved to perform a check process without the rotation of the radiation source and the detector, reducing the technical difficulty and design and production cost of CT-scan-security-check, and it is further achieved to check automatically and continuously on the checked article and to speed up the procedure of CT scan security check.

## Description

### Field of the Invention

The present invention relates to the radiation detection field, and more particularly to a CT scan security check device and method for performing a security check on baggage articles.

### Background of the Invention

Currently, the radiation-ray-type security check technique for baggage articles is mainly divided into an x-ray two dimension imaging technique and a CT imaging technique. As the requirement of baggage articles security check is increased, based on the prominent technical advantages of the CT imaging technique per se over the x-ray two dimension imaging technique, the importance of the CT imaging technique in baggage articles security check work is more apparent.

The existing baggage articles CT imaging technique borrows ideas from medical CT technical solutions, that is, the baggage articles security check is carried out by a cooperation of a continuous rotation movement of the radiation source and the detector about a horizontal axis and a horizontal movement of the baggage articles. The medical CT imaging technique has been developed for a longer time and some mature experiences may be referred to for main relative members (such as slip ring, etc.), which provides a reliable technical guarantee for the development of baggage articles CT scan devices. However, the main relative members are required both to meet the reliability of continuous rotation and to implement the information communication of high speed and large amount data as well as the electric power support, so that the technical difficulty is large and the design and production cost is very high, thus disadvantageous to the spreading and application of the baggage articles CT imaging technique.

### Summary of the Invention

It is an object of the present invention to provide a CT scan security check device wherein the radiation source and the detector are configured not to rotate when operating.

It is a further object of the present invention to provide a CT scan security check device wherein the radiation source and the detector are configured to be immovable.

It is another further object of the present invention to provide a CT scan security check device wherein the radiation source and the detector are configured not to rotate and the checked article does not make a vertical lifting and lowering movement when operating.

It is another further object of the present invention to provide a CT scan security check device which speeds up the check process in the case that the radiation source and the detector are configured not to rotate when operating.

It is another further object of the present invention to provide a CT scan security check device which performs an automatic and continuous check on the checked article in the case that the radiation source and the detector are configured not to rotate when operating.

It is another object of the present invention to provide a CT scan security check method wherein the radiation source and the detector are configured not to rotate when operating.

It is a further object of the present invention to provide a CT scan security check method wherein the radiation source and the detector are configured to be immovable.

It is another further object of the present invention to provide a CT scan security check method wherein the radiation source and the detector are configured not to rotate and the checked article does not make a vertical lifting and lowering movement when operating.

It is another further object of the present invention to provide a CT scan security check method which speeds up the check process in the case that the radiation source and the detector are configured not to rotate when operating.

It is another further object of the present invention to provide a CT scan security check method which performs an automatic and continuous check on the checked article in the case that the radiation source and the detector are configured not to rotate when operating.

On one aspect, the present invention provides a CT scan security check device, comprising a radiation source and a detector which form a radiation detection area, and a conveyer mechanism which conveys a checked article along a conveying path, and also comprising a multidimensional movement mechanism which makes the checked article and the radiation detection area generate a relative displacement in a vertical direction and makes the checked article rotate about a vertical axis.

In an embodiment in accordance with the present invention, the multidimensional movement mechanism comprises : a rotation mechanism disposed in the conveying path and operatively making the checked article rotate after the checked article is conveyed to the rotation mechanism by the conveyer mechanism; and a vertically lifting and lowering mechanism which makes the checked article conveyed to the rotation mechanism generate a relative movement in the vertical direction to the radiation detection area.

In a further embodiment in accordance with the present invention, the radiation source and the detector are mounted to the vertically lifting and lowering mechanism.

In another further embodiment in accordance with the present invention, the rotation mechanism is rotatably mounted on the vertically lifting and lowering mechanism. Further, the radiation source and the detector are mounted to a radiation protection shield of the CT scan security check device; or alternatively, the CT scan security check device further comprises a secondary vertically lifting and lowering mechanism, and the radiation source and the detector are mounted to the secondary vertically lifting and lowering mechanism.

The vertically lifting and lowering mechanism comprises a load-bearing platform and a vertically lifting and lowering electromotor to drive the load-bearing platform to move in the vertical direction.

The rotation mechanism comprises: a support plate rotatably mounted on the load-bearing platform; a plurality of support rollers mounted on the support plate which rotate together with the support plate and bring the checked article to rotate after the checked article is conveyed on the plurality of support rollers by the conveyer mechanism; and a rotation electromotor mounted within an internal cavity of the load-bearing platform and operatively driving the support plate to rotate about the vertical axis.

The plurality of support rollers are configured to be locked when the checked article is wholly conveyed thereonto, and to rotate to convey the checked article in a horizontal direction out from the rotation mechanism after the CT scan of the checked article is completed.

On the support plate is mounted at least one sensor to detect whether or not the checked article is wholly conveyed onto the plurality of support rollers.

In a further embodiment in accordance with the present invention, the conveyer mechanism comprises a conveying-in mechanism and a conveying-out mechanism located respectively on both sides of the multidimensional movement mechanism in the conveying path.

Further, a conveying-out port of the conveying-in mechanism is at a height identical to a conveying-in port of the conveying-out mechanism; and the conveying-in mechanism and the conveying-out mechanism are preferably conveyer belt mechanisms of which the conveying directions are configured to be horizontal. Or alternatively, there is a height difference between a conveying-out port of the conveying-in mechanism and a conveying-in port of the conveying-out mechanism, and the height difference is configured to at least equal to a vertical travel distance of the vertically lifting and lowering mechanism in a check process; and at least one of the conveying-in mechanism and the conveying-out mechanism is preferably a conveyer belt mechanism of which the conveying direction is configured to be inclined.

On the other aspect, the present invention provides a CT scan security check method, comprising the following steps: 1) making the checked article and the radiation detection area generate a relative displacement in a vertical direction and making the checked article to perform a rotation movement; 2) during the checked article passing through the radiation detection area, obtaining information data on the radiation ray through the checked article; and 3) transmitting out the information data for CT arithmetic reconstruction.

Further, in step 1): the checked article performs a vertical lifting and lowering movement and a rotation movement, and the radiation detection area is stationary; or alternatively the checked article performs a rotation movement, and the radiation detection area performs a vertical movement; or alternatively the checked article performs a vertical lifting and lowering movement and a rotation movement, and the radiation detection area performs another vertical lifting and lowering movement.

Further, the CT scan security check method comprises the following steps: conveying the checked article to a check position prior to step 1); and/or conveying the checked article away from the check position after step 3).

According to the present invention, due to adopting the technical solution of making the checked article and the radiation detection area generate a relative displacement in a vertical direction and making the checked article perform a rotation movement, it can be achieved to perform a CT-scan-security-check on the checked article without the rotation of the radiation source and the detector, reducing the technical difficulty and design and production cost of CT-scan-security-check. The present invention further provides a automatic conveyer mechanism and necessary sensors so that the checked article can be checked automatically and continuously, and provides a secondary vertically lifting and lowering mechanism for the radiation source and the detector, speeding up the procedure of CT scan security check.

### Brief Description of the Drawings

Figure 1 is a horizontal sectional view of a CT scan security check device in accordance with the first embodiment of the present invention wherein an upper portion of the radiation protection shield is cut away to show the internal structure of the CT scan security check device;

Figure 2 is a longitudinal sectional view of the CT scan security check device of Figure 1;

Figure 3 is a left view of the CT scan security check device of Figure 1 (a vertically lifting and lowering mechanism seeable below the conveyer mechanism is omitted in Figure 3);

Figure 4 is a structural schematic view of a CT scan security check device in accordance with the second embodiment of the present invention.

The following reference numbers are used in the accompanying drawings:
10. conveyer mechanism;
12. conveying-in mechanism;
14. conveying-out mechanism;
20. radiation source;
30. detector;
40. radiation protection shield;
50. rotation mechanism;
52. support plate;
53. support roller;
55. rotation electromotor;
54. sensor;
60. vertically lifting and lowering mechanism;
61. load-bearing platform;
62. threaded spindle;
65. vertically lifting and lowering electromotor;
70. checked article;
80. multidimensional movement mechanism;
100. CT scan security check device in accordance with the first embodiment of the present invention.
200. CT scan security check device in accordance with the second embodiment of the present invention

### Detailed Description of the Preferred Embodiment

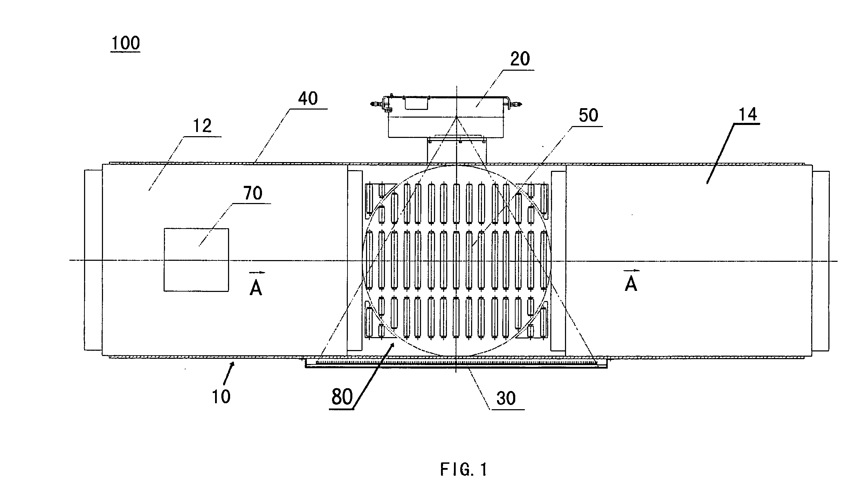

As shown in Figure 1, a CT scan security check device 100 in accordance with the first embodiment of the present invention comprises generally a radiation source 20 and a detector 30 which form a radiation detection area, and a conveyer mechanism 10 which conveys a checked article 70 along a conveying path A . The radiation detection area is schematically shown by two dash dot lines in Figure 1.

The radiation source 20 may be generally one or more x-ray sources or isotope sources of which the energy is configured to be adjustable. The detector 30 may be a one-dimensional detector array or two-dimensional detector array, and these detector arrays may be single-layer structure or multi-layer structure. As well known by those skilled in the art, the shape of the radiation detection area depends on the form or type of the adopted detector. If the detector adopts a rectangular two-dimensional detector array, the radiation beam should be reshaped into a rectangle by means of a collimator; and if the detector adopts a one-dimensional linear detector, the radiation beam should be reshaped into a linear shape by means of a collimator.

Particularly, the CT scan security check device 100 also comprises a multidimensional movement mechanism 80 which makes the checked article 70 and the radiation detection area generate a relative displacement in a vertical direction and makes the checked article 70 rotate about a vertical axis. Generally, the position of the multidimensional movement mechanism 80 in the conveying path A is herein referred to as "check position". It will be appreciated for those skilled in the art that the check position is in the conveying path A in the radiation detection area, and is under or over the radiation detection area.

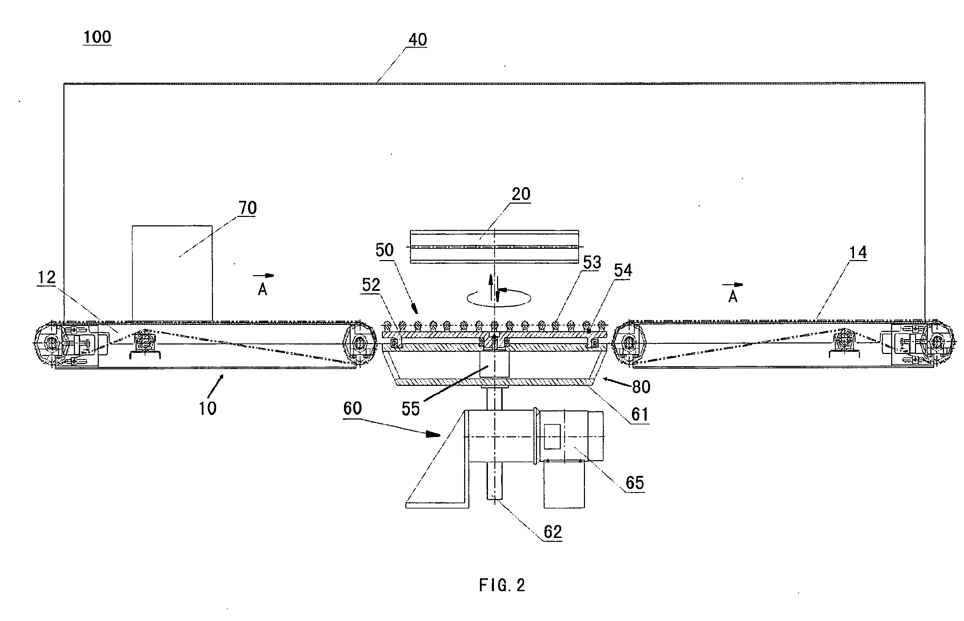

Further, as shown in Figure 2, the multidimensional movement mechanism 80 comprises a rotation mechanism 50 and a vertically lifting and lowering mechanism 60. The rotation mechanism 50 is disposed in the conveying path A of the conveyer mechanism 10, and after the checked article 70 is conveyed to the rotation mechanism 50 by the conveyer mechanism 10, the rotation mechanism 50 operatively makes the checked article 70 rotate and the vertically lifting and lowering mechanism 60 makes the checked article 70 conveyed to the rotation mechanism 50 generate a relative movement in the vertical direction to the radiation detection area.

It should be noted that such a description or definition of a feature or mechanism being "in the conveying path" or "on the conveying path" includes locating the feature or mechanism in or on extended line(s) of the conveying path or connecting line(s) between several segments of the conveying path (since the extended line(s) of the conveying path or the connecting line(s) between several segments of the conveying path may be generally viewed as part of the conveying path), as easily understood by those skilled in the art.

In some embodiments of the present invention, the conveying path A may be divided into two segments, the first segment being a conveying-in path by which the conveyer mechanism 10 conveys the checked article 70 onto the rotation mechanism 50 and the second segment being a conveying-out path by which the conveyer mechanism 10 receives the CT scanned checked article 70 from the rotation mechanism 50 and conveys it out. The rotation mechanism 50 may be deposed in a connecting line between the conveying-in path and the conveying-out path. The conveying-in path and the conveying-out path are generally in line. Alternatively, it is also possible to arrange the conveying-in path and the conveying-out path so that their projections in a horizontal plane or in a vertical plane form a certain angle, which may be useful in some applications.

In a preferable embodiment of the present invention, the rotation mechanism 50 is rotatably mounted on the vertically lifting and lowering mechanism 60. The radiation source 20 and the detector 30 may be connected with each other by rigid member(s), and for example, they may be mounted to the radiation protection shield 40 of the CT scan security check device 100.

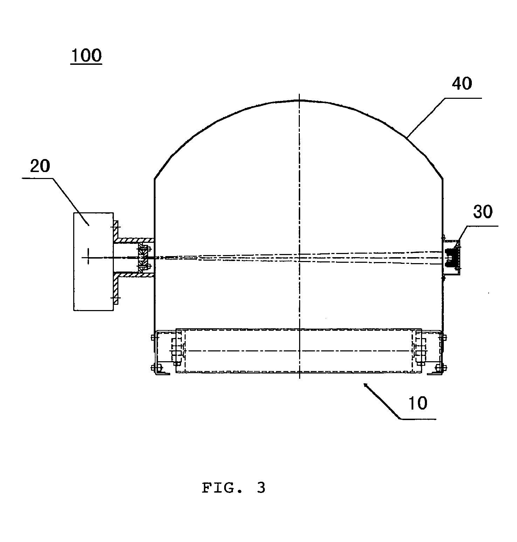

Now referring to Figure 3, the radiation source 20 is mounted on one side of the radiation protection shield 40, and the detector 30 is mounted on the other side of the radiation protection shield 40 opposite to the radiation source 20. The sectional shape of the radiation protection shield 40 may be generally configured into an approximately inverse U-shape or any other suitable shapes, such as a half-circle shape.

Referring to Figure 2 again, the vertically lifting and lowering mechanism 60 comprises a load-bearing platform 61 and a vertically lifting and lowering electromotor 65 driving the load-bearing platform 61 to move in the vertical direction. It should be noted that the term "driving" or "drive" used herein includes the meanings of "directly driving" or "indirectly driving via other transmission mechanisms". For example, in this embodiment, between the vertically lifting and lowering electromotor 65 and the load-bearing platform 61 is preferably provided a threaded spindle and nut mechanism, and the load-bearing platform 61 is fixed on the top of the threaded spindle 62. In other words, the vertically lifting and lowering electromotor 65 directly or indirectly drives a nut (not shown in the drawings), which then makes the threaded spindle 62 fitting with the nut to move in the vertical direction to bring the load-bearing platform 61 to move in the vertical direction.

The rotation mechanism 50 comprises a support plate 52, a plurality of support rollers 53 and a rotation electromotor 55. The support plate 52 is rotatably mounted on the load-bearing platform 61 of the vertically lifting and lowering mechanism 60 and can move in the vertical direction along with the load-bearing platform 61. The rotation electromotor 55 is mounted in an internal cavity of the load-bearing platform 61, operatively driving the support plate 52 to rotate about the vertical axis. Preferably, the rotation electromotor 55 is mounted at the upper portion of the internal cavity of the load-bearing platform 61.

The support rollers 53 are mounted on the support plate 52. After the checked article 70 is wholly conveyed onto the support rollers 53, the support rollers 53 are locked and no longer rotate about its pivot axis. Of course, the support rollers 53 can rotate together with the support plate 52 about the vertical axis and carry the checked article 70 to rotate. The support rollers 53 are configured to actively rotate after the CT scan on the checked article 70 is completed, in order to convey the checked article 70 out in the horizontal direction away from the rotation mechanism 50. Preferably, the support plate 52 is configured that: before the support plate 52 begins to be rotated, its angle position is oriented such that the pivot axis of the support rollers 53 is perpendicular to the conveying-in path; and after this CT scan is completed, the angle position is oriented such that the pivot axes of the plurality of support rollers 53 are perpendicular to the conveying-out path when the support plate 52 stops to rotate.

Any suitable means may be adopted to detect whether or not the checked article 70 is wholly conveyed onto the support rollers 53. By way of example, this detection may be achieved by providing at least one sensor 54 on the support plate 52. Once a certain signal arises in the at least one sensor 54, a control system of the CT scan security check device can control the support rollers 53 to stop rotating and be locked in order to ensure the checked article to be stationary relative to the support rollers 53; and after the CT scan is completed, the control system sends a rotation signal to the support rollers 53, and the support rollers 53 are rotated to convey out the checked article 70 along the horizontal direction.

The sensors 54 are preferably weight sensors which can automatically sense whether the checked article is already conveyed onto the rotation mechanism 50 (i.e., whether the checked article is conveyed onto the support rollers 53). In particular, two weight sensors may be provided respectively at suitable positions on the support plate 52 near to the conveying-in mechanism 12, and another two weight sensors may be provided respectively at suitable positions on the support plate 52 near to the conveying-out mechanism 14. In this way, by means of a series of logic relations easily configured, it can be detected whether or not the checked article 70 is wholly conveyed onto the support rollers 53, and preferably whether or not the checked article 70 is conveyed in the centre of the rotation mechanism 50. For example, assuming that the distance between the two groups of sensors is L (the length of the checked article 70 is less than the distance L), based on the signaling interval of the first group of sensors and the rotation speed of the support rollers, the time period from after no signal arises in the first group of sensors to before the support rollers 53 stops to rotate and be locked can be calculated, such that the checked article 70 is just conveyed in the center of the support plate 52. Similarly, based on the signaling interval of the second group of sensors it can be detected whether or not the checked article 70 wholly departs away from the support rollers 53 or the rotation mechanism 50. It should be appreciated by those skilled in the art that it is possible to adopt position sensors to perform such detection.

The conveyer mechanism 10 may comprise a conveying-in mechanism 10 and a conveying-out mechanism 14 which are respectively located on both sides of the multidimensional movement mechanism 80 in the conveying path A. The conveying-out port of the conveying-in mechanism 12 extends into the radiation protection shield 40 so as to convey the checked article 70 into the radiation protection shield 40 and further convey it onto the support rollers 53 of the support plate 52. The conveying-in port of the conveying-out mechanism 14 is also located in the radiation protection shield 40 so as to receive the checked article 70 conveyed from the support rollers 53 of the support plate 52, and to convey the checked article 70 away from the radiation protection shield 40 after the check is completed.

In the CT scan security check device 100, the conveying-out port of the conveying-in mechanism 12 is at a height identical to the conveying-in port of the conveying-out mechanism 14, and the conveying-in mechanism 12 and the conveying-out mechanism 14 are preferably conveyer belt mechanisms of which the conveying directions are configured to be horizontal.

When using the CT scan security check device 100 to take a check, the radiation source 20 and the detector 30 are generally first set to the operating state to form the radiation detection area; then the checked article 70 is placed on the conveying-in mechanism 12 at the input port and conveyed onto the rotation mechanism 50 by the conveying-in mechanism 12. Once the checked article 70 is conveyed onto the support rollers 53 on the support plate 52, the sensor 54 can automatically sense it, and then the support rollers 53 are locked to make the checked article 70 stationary on the support rollers 53 and the rotation mechanism 50 bring the checked article 70 to rotate together. The vertically lifting and lowering electromotor 65 of the vertically lifting and lowering mechanism 60 drives the nut to rotate, and the nut in turn drives the threaded spindle 62 and further drives the load-bearing platform 61 which carries the rotation mechanism 50 to performs the vertical lifting and lowering movement so as to complete the CT scan process. After the CT scan process is completed, the rotation mechanism 50 and the lifting and lowering mechanism 60 come back to their initial states, then the support rollers 53 on the rotation mechanism 50 automatically rotate to convey the checked article 70 onto the conveying-out mechanism 14, and then the conveying-out mechanism 14 conveys the checked article away from the CT scan security check device 100. The above-mentioned action processes can be controlled and completed by means of existing circuits.

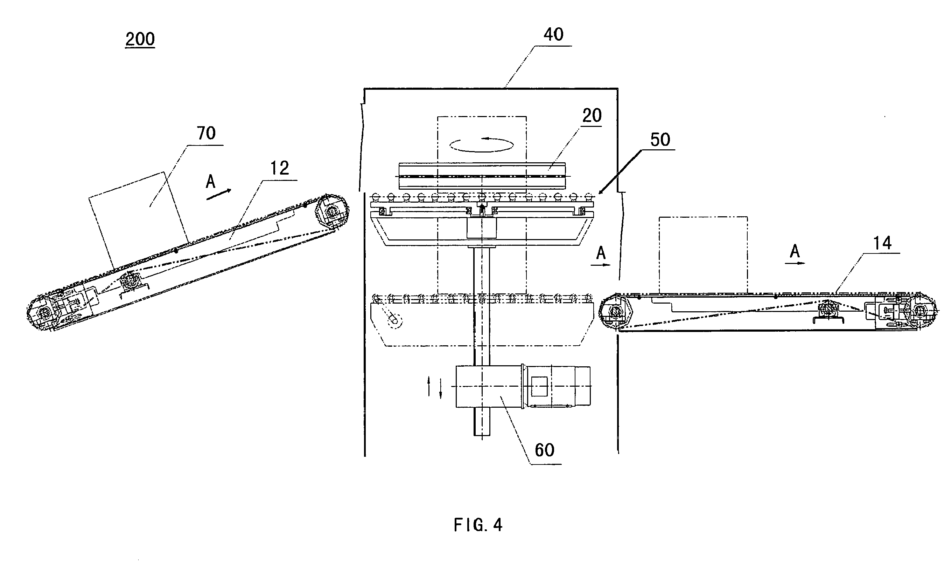

Now referring to Figure 4, the structure of the CT scan security check device 200 in accordance with the second embodiment of the present invention is substantially identical to that of the first embodiment of the present invention. But in the CT scan security check device 200, there is a height difference between the conveying-out port of the conveying-in mechanism 12 and the conveying-in port of the conveying-out mechanism 14. The height difference is configured to at least equal to a vertical travel distance of the vertically lifting and lowering mechanism 60 in a check process. Particularly, at least one of the conveying-in mechanism 12 and the conveying-out mechanism 14 is a conveyer belt mechanism of which the conveying direction is configured to be inclined. More particularly, the conveying-in mechanism 12 is a conveyer belt mechanism of which the conveying direction is configured to be inclined upwards, and the conveying-out mechanism 14 is a conveyer belt mechanism of which the conveying direction is configured to be horizontal, wherein the position of the conveying-out port of the conveying-in mechanism 12 is above that of the conveying-in port. It should be appreciated for those skilled in the art, this arrangement form of the conveying-in mechanism 12 and the conveying-out mechanism 14 is so as that the check on the checked article can be completed under only one lifting or lowering movement, increasing the checking efficiency.

Further, in the CT scan security check devices of the present invention, a secondary vertically lifting and lowering mechanism (not shown in the drawings) may be provided for the radiation source 20 and the detector 30. In this way, the checked article performs a vertical lifting and lowering movement along with the vertically lifting and lowering mechanism 60, and the radiation source 20 and the detector 30 perform another vertical lifting and lowering movement along with the secondary vertically lifting and lowering mechanism, which not only is advantageous to expedite the scan speed, but also is particularly advantageous in some applications where the checked article is inconvenient to perform a larger travel distance of vertical lifting and lowering movement.

In the embodiments described above, the checked article performs separately a lifting and lowering movement and a rotation movement by the action of the vertically lifting and lowering mechanism and the rotation mechanism, so as to pass through the radiation detection area and complete the CT scan. But according to another alternative embodiment of the present invention, the radiation source 20 and the detector 30, rather than the rotation mechanism 50, may be mounted to the vertically lifting and lowering mechanism 60. In this way, the conveyer mechanism 10, the rotation mechanism 50 and the vertically lifting and lowering mechanism 60 of the present invention are independent to each other (in other words, these mechanism may perform their respective movements independently to each other). The checked article 70 is conveyed onto the rotation mechanism 50 by the conveyer mechanism 10, cooperating with the vertical lifting and lowering movement of the radiation source 20 and the detector 30 driven by the vertically lifting and lowering mechanism 60 so that the radiation detection area passes through the rotating checked article to realize the CT scan of the article. Such an alternative embodiment is particularly advantageous in some applications where the checked article is inconvenient to perform a larger travel distance of vertical lifting and lowering movement.

On the other aspect, the present invention provides a CT scan security check method. The devices to perform the check method comprise but are not limited to the CT scan security check devices provided by the present invention. When using the method to perform a security check, the checked article may be firstly conveyed to the check position. Then, the checked article and the radiation detection area are made to generate a relative displacement in a vertical direction, and the checked article per se is made to perform independently a rotation movement. In particular, the checked article performs a vertical lifting and lowering movement and a rotation movement, and the radiation detection area is stationary; or the checked article performs a rotation movement, and the radiation detection area performs a vertical movement; or the checked article performs a vertical lifting and lowering movement and a rotation movement, and the radiation detection area performs another vertical lifting and lowering movement.

During the checked article passing through the radiation detection area, the information data on the radiation ray through the checked article is obtained and then transmitted out for CT arithmetic reconstruction. Then, the checked article may be conveyed away from the check position as desired. Such steps are well-known or easily achieved for those skilled in the art and are not described in detail herein for purposes of simplicity.

The foregoing exemplary embodiments are illustrative of the present invention and are not to be construed as limiting thereof. Those skilled in the art will readily appreciate that many modifications, alternatives and equivalents are possible in the exemplary embodiments without departing from the spirit and scope of this invention. Accordingly, all such modifications are intended to be included within the scope of this invention. For example, the inventive concepts may be applied to some radiation ray scan security-check device or method which synthetically adopts an x-ray two-dimensional imaging technique and a CT imaging technique. Again for example, the transmission mechanisms such as gear-rack mechanism, cam-lifter mechanism, crank-slider mechanism and the like may be adopted or some linear motor may be directly adopted so as to alternatively achieve the vertically lifting and lowering mechanism. Therefore, the protection scope of the present invention is intended to be defined by the claims appended hereto and their equivalents, and all modifications, alternatives and equivalents of the exemplary embodiments should be included in the scope of the present invention.

## Claims

1. A CT scan security check device, comprising a radiation source and a detector which form a radiation detection area, and a conveyer mechanism which conveys a checked article along a conveying path, **characterized by** also comprising a multidimensional movement mechanism which makes the checked article and the radiation detection area generate a relative displacement in a vertical direction and makes the checked article rotate about a vertical axis.

2. The CT scan security check device according to claim 1, **characterized in that** the multidimensional movement mechanism comprises :
a rotation mechanism disposed in the conveying path and operatively making the checked article rotate after the checked article is conveyed to the rotation mechanism by the conveyer mechanism; and
a vertically lifting and lowering mechanism which makes the checked article conveyed to the rotation mechanism generate a relative movement in the vertical direction to the radiation detection area.

3. The CT scan security check device according to claim 2, **characterized in that** the radiation source and the detector are mounted to the vertically lifting and lowering mechanism.

4. The CT scan security check device according to claim 2, **characterized in that** the rotation mechanism is rotatably mounted on the vertically lifting and lowering mechanism.

5. The CT scan security check device according to claim 4, **characterized in that** the radiation source and the detector are mounted to a radiation protection shield of the CT scan security check device.

6. The CT scan security check device according to claim 4, **characterized by** further comprising a secondary vertically lifting and lowering mechanism, the radiation source and the detector being mounted to the secondary vertically lifting and lowering mechanism.

7. The CT scan security check device according to claim 4, **characterized in that** the vertically lifting and lowering mechanism comprises a load-bearing platform and a vertically lifting and lowering electromotor to drive the load-bearing platform to move in the vertical direction.

8. The CT scan security check device according to claim 7, **characterized in that** the rotation mechanism comprises:
a support plate rotatably mounted on the load-bearing platform;
a plurality of support rollers mounted on the support plate which rotate together with the support plate and carry the checked article to rotate after the checked article is conveyed on the plurality of support rollers by the conveyer mechanism; and
a rotation electromotor mounted within an internal cavity of the load-bearing platform and operatively driving the support plate to rotate about the vertical axis.

9. The CT scan security check device according to claim 8, **characterized in that** the plurality of support rollers are configured to be locked when the checked article is wholly conveyed thereonto, and to rotate to convey the checked article in a horizontal direction out from the rotation mechanism after the CT scan of the checked article is completed.

10. The CT scan security check device according to claim 8, **characterized in that** on the support plate is mounted at least one sensor to detect whether or not the checked article is wholly conveyed onto the plurality of support rollers.

11. The CT scan security check device according to claim 1, **characterized in that** the conveyer mechanism comprises a conveying-in mechanism and a conveying-out mechanism located respectively on both sides of the multidimensional movement mechanism in the conveying path.

12. The CT scan security check device according to claim 11, **characterized in that** a conveying-out port of the conveying-in mechanism is at a height identical to a conveying-in port of the conveying-out mechanism.

13. The CT scan security check device according to claim 12, **characterized in that** the conveying-in mechanism and the conveying-out mechanism are conveyer belt mechanisms of which the conveying directions are configured to be horizontal.

14. The CT scan security check device according to claim 11, **characterized in that** there is a height difference between a conveying-out port of the conveying-in mechanism and a conveying-in port of the conveying-out mechanism, and the height difference is configured to at least equal to a vertical travel distance of the vertically lifting and lowering mechanism in a check process.

15. The CT scan security check device according to claim 14, **characterized in that** at least one of the conveying-in mechanism and the conveying-out mechanism is a conveyer belt mechanism of which the conveying direction is configured to be inclined.

16. A CT scan security check method, **characterized by** comprising the following steps:
1) making the checked article and the radiation detection area generate a relative displacement in a vertical direction and making the checked article to perform a rotation movement;
2) during the checked article passing through the radiation detection area, obtaining information data on the radiation ray through the checked article; and
3) transmitting out the information data for CT arithmetic reconstruction.

17. The security check method according to claim 16, **characterized in that** in step 1), the checked article performs a vertical lifting and lowering movement and a rotation movement, and the radiation detection area is stationary.

18. The security check method according to claim 16, **characterized in that** in step 1), the checked article performs a rotation movement, and the radiation detection area performs a vertical movement.

19. The security check method according to claim 16, **characterized in that** in step 1), the checked article performs a vertical lifting and lowering movement and a rotation movement, and the radiation detection area performs another vertical lifting and lowering movement.

20. The security check method according to claim 16, **characterized by** further comprising the following steps:
conveying the checked article to a check position prior to step 1); and/or
conveying the checked article away from the check position after step 3).
